# EUROPÄISCHE PATENTSCHRIFT

(11) **EP 0 987 914 B1**
(45) Veröffentlichungstag und Bekanntmachung des Hinweises auf die Patenterteilung: **12.03.2003**
(21) Anmeldenummer: 99116238.9
(22) Anmeldetag: 17.08.1999
(51) Int. Cl.: H04Q 7/38, G01S 5/14

(54) **Verfahren zur Bestimmung der Position einer mobilen Kommunikationseinrichtung und Kommunikationseinrichtung zur Durchführung des Verfahrens**
Method for determining the position of a mobile communication device and communication device for implementing the method
Procédé pour déterminer la position d'un dispositif de communication mobile et dispositif de communication pour la mise en oeuvre de ce procédé

(30) Priorität: 18.09.1998 DE 19842836
(43) Veröffentlichungstag der Anmeldung: 22.03.2000
(73) Patentinhaber: Nokia Corporation, 02150 Espoo (FI)
(72) Erfinder: Decker, Peter, 45772 Marl (DE)
(74) Vertreter: TER MEER STEINMEISTER & PARTNER GbR

(56) Entgegenhaltungen:
- EP-A- 0 789 498
- WO-A-00/29868
- GB-A- 2 300 324
- US-A- 5 732 387

## Beschreibung

Die Erfindung bezieht sich auf ein Verfahren zur Bestimmung der Position einer Kommunikationseinrichtung und auf eine Kommunikationseinrichtung zur Durchführung des Verfahrens.

Zukünftige tragbare oder Auto-Telefone werden die Möglichkeit bieten, z.B. bei einem Unfall oder einer anderen Notfallsituation automatisch oder manuell eine Kurznachricht an einen Diensteanbieter bzw. Serviceprovider zu senden. mit der auch die Position des Telefons übertragen wird.

In heutigen Verkehrstelematiksystemen ist vorgesehen, daß die letzten vier bekannten Positionsinformationen z.B. eines GPS Empfängers, der zum Beispiel in einem Kraftfahrzeug installiert sein kann, zum Serviceprovider übertragen werden. Die Übertragung mehrerer Positionsinformationen ist notwendig, um festzustellen, in welcher Richtung sich das Fahrzeug zuletzt bewegte, um z.B. bei Unfällen auf Autobahnen ein Rettungsfahrzeug sofort in der richtigen Richtung auf die Autobahn schicken zu können.

Dabei wird allerdings nicht berücksichtigt, daß die Genauigkeit der GPS Positionsinformation stark schwankt.

Die EP 0 522 860 A1 betrifft ein GPS-Navigationssystem, das neben den eigentlichen GPS-Positionsdaten auch die mit diesen zusammen übermittelten Positionsgenauigkeitsinformation PDOP (Position Delution of Precession) nutzt.

Dieses Navigationssystem weist ein GPS-Positionsbestimmungsmodul und ein davon unabhängig nach dem Koppelnavigationsverfahren arbeitendes Positionsbestimmungsmodul auf, die erste bzw. zweite Positionsdaten liefern. Ein Auswahlmodul wählt von den ersten und zweiten Positionsdaten die ersten Positionsdaten (GPS-Positionsdaten) als aktuelle Positionsdaten aus, wenn die Differenz zwischen den aktuellen ersten Positionsdaten und den vorhergehenden ersten Positionsdaten kleiner als ein vorbestimmter Wert ist, wenn der mitgelieferte Positionsgenauigkeitswert kleiner als ein vorbestimmter Wert ist und falls der Abstand zwischen den ersten und zweiten Positionsdaten größer als ein dritter vorbestimmte Wert ist. Andernfalls werden die zweiten durch Koppelnavigation erhaltenen Positionsdaten als aktuelle Positionsdaten ausgewählt.

Anschließend werden in jedem Fall die aktuellen ersten Positionsdaten (GPS-Positionsdaten) unabhängig von ihrer Positionsgenauigkeit als vorhergehende Positionsdaten gespeichert, um für die nächste Positionsbestimmung als vorhergehende GPS Positionsdaten bereitzustehen.

Die Speicherung mehrerer Positionsdaten ist hier nicht gezeigt.

Die US 5,732,387 betrifft ein Verfahren und eine Vorrichtung zum Rufaufbau in einem Satellitenkommunikationssystem. In diesem System werden Ortsoder Positionsdaten zusammen mit einem "Zeitstempel" in einem mobilen Endgerät gespeichert. Soll mit dem mobilen Endgerät eine Verbindung aufgebaut werden, so wird anhand des Zeitstempels und der aktuellen Zelt überprüft, ob die gespeicherten Ortsdaten noch gültig sind, falls dies der Fall ist, wird die Serviceanforderung unter Benutzung der gespeicherten gültigen Ortsdaten angefordert. Anderenfalls erfolgt die Anforderung ohne gültige Daten, sodass vor dem eigentlichen Rufaufbau die Ortsdaten noch empfangen werden müssen. Die Gültigkeitsdauer von empfangenen Ortsdaten hängt dabei von der Mobilität des Endgerätes ab.

Der Erfindung liegt die Aufgabe zugrunde, ein Verfahren anzugeben, um im Bedarfs- bzw. Notfall genauere Positionsinformation bezüglich der Kommunikationseinrichtung bereitstellen zu können. Ferner soll eine Kommunikationseinrichtung zur Durchführung des Verfahrens geschaffen werden.

Eine verfahrensseitige Lösung der gestellten Aufgabe befindet sich im Anspruch 1. Dagegen ist eine vorrichtungsseitige Lösung der gestellten Aufgabe im Anspruch 12 angegeben.

Bei einem erfindungsgemäßen Verfahren zur Bestimmung der Position einer Kommunikationseinrichtung erhält diese Positionsdaten zusammen mit dazugehörigen Positionsgenauigkeiten, wobei die Kommunikationseinrichtung zur Ermittlung von Optimalpositionen einer Route, auf der sich die Kommunikationseinrichtung bewegt, mehrere solcher zuletzt erhaltener Positionsdaten speichert, deren Positionsgenauigkeit besser ist als eine vorgegebene Positionsgenauigkeit.

Bei der Erfindung wird somit Positionsinformation, die mit einer zu großen Ungenauigkeit behaftet ist, nicht weiter verwendet und nur solche Positionsinformation zum Serviceprovider weitergegeben, die einen hohen Genauigkeitsgrad aufweist, um im Bedarfs- bzw. Notfall die Kommunikationseinrichtung sicherer auffinden zu können bzw. eine sie mitführende Person oder ein sie mitführendes Fahrzeug.

Zur Ermittlung der Optimalpositionen wird die Route, auf der sich die Kommunikationseinrichtung bewegt, zweckmäßigerweise in Abschnitte unterteilt. Hierbei kann es sich um vorbestimmte Weglängen oder um durch vorbestimmte Zeitperioden definierte Abschnitte handeln. Für jeden dieser Abschnitte kann dann eine Optimalposition ermittelt werden, so daß sich zum Beispiel ständig vier Optimalpositionen für vier aufeinanderfolgende Abschnitte speichern lassen, etwa in einem als Schieberegister ausgebildeten Speicher. Die Anzahl der zwischengespeicherten Optimalpositionen könnte auch größer als vier sein.

Genauer gesagt kann also z.B. eine jeweilige der Optimalpositionen entlang jeweils einer vorbestimmten Weglänge ermittelt werden, oder es kann eine jeweilige der Optimalpositionen in jeweils einer vorbestimmten Zeitperiode ermittelt werden.

Bei der Ermittlung der jeweiligen Optimalpositionen in den jeweiligen Abschnitten (Weg- oder Zeitabschnitte) kann die vorgegebene Positionsgenauigkeit auch verändert werden, um bestmögliche Optimalpositionen zu erhalten.

So kann nach einer Ausgestaltung der Erfindung während der vorbestimmten Weglänge bzw. der vorbestimmten Zeitperiode die vorgegebene Positionsgenauigkeit durch eine solche von später gelieferten Positionsdaten ersetzt werden, die besser ist als die vorgegebene Positionsgenauigkeit. Dadurch läßt sich in einfacher Weise in dem jeweiligen Weg- oder Zeitabschnitt die beste bzw. genauste Position auffinden, die dann zwischengespeichert wird.

Dabei kann die vorgegebene Positionsgenauigkeit zu Beginn einer jeden vorbestimmten Weglänge oder zu Beginn einer jeden vorbestimmten Zeitperiode neu auf einen (gleichen) Anfangswert eingestellt werden, der dann wieder etwas größer als die beste Positionsgenauigkeit des vorhergehenden Abschnitts eingestellt wird, um im laufenden Abschnitt zunächst einmal wieder überhaupt eine Optimalposition erfassen zu können.

Natürlich kann der Anfangswert der Positionsgenauigkeit für einen jeweiligen Abschnitt auch von Abschnitt zu Abschnitt verändert werden, etwa in Übereinstimmung mit den tatsächlichen geographischen Verhältnissen.

Im Bedarfsfall werden dann wenigstens diejenigen Optimalpositionen zu einem Serviceprovider übertragen, die für vollständig durchlaufene vorbestimmte Weglängen bzw. vorbestimmte Zeitperioden ermittelt worden sind.

Um das Auffinden der Kommunikationseinrichtung im Bedarfs-bzw. Notfall aber noch sicherer zu machen, kann zusätzlich auch diejenige Optimalposition zum Serviceprovider übertragen werden, die bei Eintreten des Bedarfs-bzw. Notfalls für eine noch nicht vollständig durchlaufene vorbestimmte Weglänge bzw. vorbestimmte Zeitperiode ermittelt worden ist.

Darüber hinaus wird in weiterer Ausgestaltung der Erfindung zusätzlich die bei Eintreten des Bedarfsfalls bzw. Notfalls letzte empfangene Positionsinformation zum Serviceprovider übertragen, auch wenn deren Positionsgenauigkeit schlechter ist als die vorgegebene Positionsgenauigkeit. Auch eine derartige Positionsinformation mit relativ schlechter Positionsgenauigkeit kann einen guten Hinweis auf den tatsächlichen Ort der Kommunikationseinrichtung liefern, da diese Positionsinformation zu einer Position gehört, die am nächsten zur Kommunikationseinrichtung liegt.

Eine Kommunikationseinrichtung, die Positionsdaten zusammen mit dazugehörigen Positionsgenauigkeiten erhält, enthält eine Auswähleinrichtung zum Auswählen mehrerer solcher zuletzt gelieferter Positionsdaten, deren Positionsgenauigkeit besser ist als eine vorgegebene Positionsgenauigkeit, sowie eine Speichereinrichtung zum Speichern der so ausgewählten mehreren Positionsdaten als Optimalpositionen einer Route, auf der sich die Kommunikationseinrichtung bewegt.

Fällt für aufeinanderfolgende Wegabschnitte bzw. Zeitabschnitte jeweils eine Optimalposition an, so können aufeinanderfolgende Optimalpositionen durch einen eine bestimmte Anzahl von Speicherplätzen aufweisenden Speicher hindurchgeschoben werden, beispielsweise durch einen Speicher mit vier Speicherplätzen hindurchgeschoben werden, so daß ständig die letzten vier bzw. neuesten Optimalpositionen bereitstehen, um im Bedarfs- bzw. Notfall zu einem Serviceprovider übertragen werden zu können.

Dabei kann die Kommunikationseinrichtung eine Schalteinrichtung aufweisen, durch die im Bedarfs- bzw. Notfall die Speichereinrichtung mit einem Sender verbindbar ist, über den dann die Übertragung der Optimalpositionen zum Serviceprovider erfolgt.

Ferner kann die Auswähleinrichtung einen Zeitraum für das Auswählen der Positionsdaten in Abhängigkeit von Steuersignalen einstellen, die nach Zurücklegen vorbestimmter Weglängen der Kommunikationseinrichtung oder nach Ablauf vorbestimmter Zeitperioden erzeugbar sind. Durch die Steuersignale wird also die Route der Kommunikationseinrichtung in die bereits zuvor erwähnten Abschnitte unterteilt.

Die Positionsdaten zusammen mit den Positionsgenauigkeiten können direkt von einem satellitengestützten Funk-Navigationsgerät (z. B. GPS-Empfänger) kommen oder von der Kommunikationseinrichtung durch Laufzeitmessung von Signalen, die von verschiedenen Basisstationen kommen, ermittelt werden.

Ein Ausführungsbeispiel der Erfindung wird nachfolgend unter Bezugnahme auf die Zeichnung im einzelnen erläutert. Es zeigen:
**Figur 1** eine Kraftfahrzeug- Fahrtroute mit Positionsdaten unterschiedlicher Positionsgenauigkeit;
**Figur 2** ein Blockschaltbild der erfindungsgemäßen Vorrichtung zur Auswahl und Zwischenspeicherung von Optimalpositionen entlang der Kraftfahrzeug-Fahrtroute; und
**Figur 3** ein Flußdiagramm zur Erläuterung der Auswahl und Zwischenspeicherung von Optimalpositionen entlang der Kraftfahrzeug-Fahrtroute.

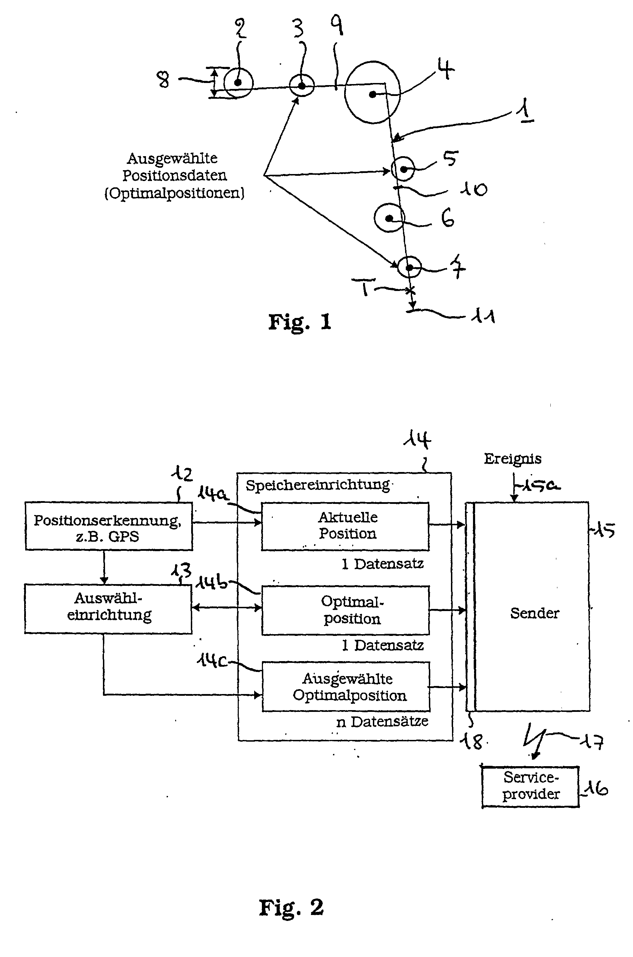

In der Figur 1 ist eine von einem nicht dargestellten Kraftfahrzeug zurückgelegte Fahrtroute 1 angedeutet. Das Kraftfahrzeug sei mit einem Funk-Navigationsgerät ausgestattet, etwa mit einem GPS- bzw. Satelliten-Navigationsgerät. Das GPS-Navigationsgerät enthält einen GPS-Empfänger, der aufgrund empfangener Satellitensignale Positionsdaten an seinem Aus gang bereitstellt. Diese Positionsdaten umfassen zum Beispiel X- und Y-Koordinaten zur Kennzeichnung von Positionen 2, 3, 4, 5, 6 und 7 entlang der Fahrtroute 1. Die Positionsdaten für die jeweiligen Positionen 2-7 erscheinen in periodischen Abständen am Ausgang des GPS-Empfängers, etwa jede Sekunde. Zusätzlich zu den jeweiligen Positionsdaten liefert der GPS-Empfänger an seinem Ausgang zugehörige Positionsgenauigkeiten 8 in Form von Kennwerten, etwa Werte ΔX, ΔY, um die Präzision der jeweiligen Positionsdaten zu charakterisieren. Diese Positionsgenauigkeiten 8 sind in Figur 1 in Form von Kreisen um die jeweiligen GPS-Positionen herum eingezeichnet. Sie können auch durch den Radius oder Durchmesser der jeweiligen Kreise spezifiziert werden. In Figur 1 ist der Durchmesser gewählt.

Bewegt sich also das Kraftfahrzeug entlang der Fahrtroute 1 in Richtung des eingezeichneten Pfeils, so erscheinen zuerst am Ausgang des GPS-Empfängers die Positionsdaten 2 mit zugehöriger Positionsgenauigkeit. Danach erscheinen am Ausgang des GPS-Empfängers die Positionsdaten 3 mit jetzt besserer Positionsgenauigkeit (Kreis mit kleinerem Durchmesser), während danach die Positionsdaten 4 mit schlechterer Positionsgenauigkeit erscheinen (Kreis mit noch größerem Durchmesser), usw..

In Übereinstimmung mit der vorliegenden Erfindung werden entlang der Fahrtroute 1 des Kraftfahrzeuges allerdings nicht sämtliche Positionsdaten 2-7 permanent zwischengespeichert, sondern nur eine vorbestimmte und geringe Anzahl derjeniger Positionsdaten, deren Positionsgenauigkeit besser ist als eine vorgegebene Positionsgenauigkeit. Es handelt sich hier um die in Figur 1 dargestellten Positionsdaten 3, 5 und 7. Diese sollen nachfolgend als ausgewählte Positionsdaten bzw. Optimalpositionen bezeichnet werden.

Um diese Optimalpositionen auffinden zu können, wird zunächst die Fahrtroute 1 in vorbestimmte Abschnitte unterteilt, wie durch die Querbalken 9, 10 und 11 angedeutet ist. Diese Abschnitte können gleiche Weglängenabschnitte entlang der Fahrtroute 1 sein, die sich durch Messung der zurückgelegten Fahrtstrecke des Kraftfahrzeugs einstellen lassen. Zu diesem Zweck könnten sich am Fahrzeug Wegaufnehmer befinden, die jeweils nach einer vorbestimmten Weglänge ein Steuersignal liefern, das angibt, daß nunmehr einer der genannten Abschnitte durchlaufen worden ist. In Figur 1 werden die Steuersignale an den Positionen der Querbalken 9, 10 und 11 erscheinen.

Ebensogut könnte man die Fahrtroute 1 aber auch in zeitliche Abschnitte unterteilen, indem etwa ein Zähler periodisch von einem Anfangswert bis zu einem Endwert läuft und bei Erreichen des Endwerts ein entsprechendes Steuersignal liefert.

In jedem der zuvor bestimmten Abschnitte (Weglänge oder Zeitperiode) werden dann jeweils diejenigen Positionsdaten aufgesucht, deren Positionsgenauigkeit besser ist als die vorgegebene Positionsgenauigkeit. Sind die genannten Weglängenabschnitte bzw. Zeitperioden entlang der Fahrtroute 1 relativ lang, so könnte man daran denken, Positionsdaten für mehrere Positionen pro Abschnitt zu speichern, wenn sie die oben genannte Bedingung bezüglich der Positionsgenauigkeit erfüllen. Positionsdaten mit schlechterer Positionsgenauigkeit als die vorgegebene Positionsgenauigkeit werden aussortiert.

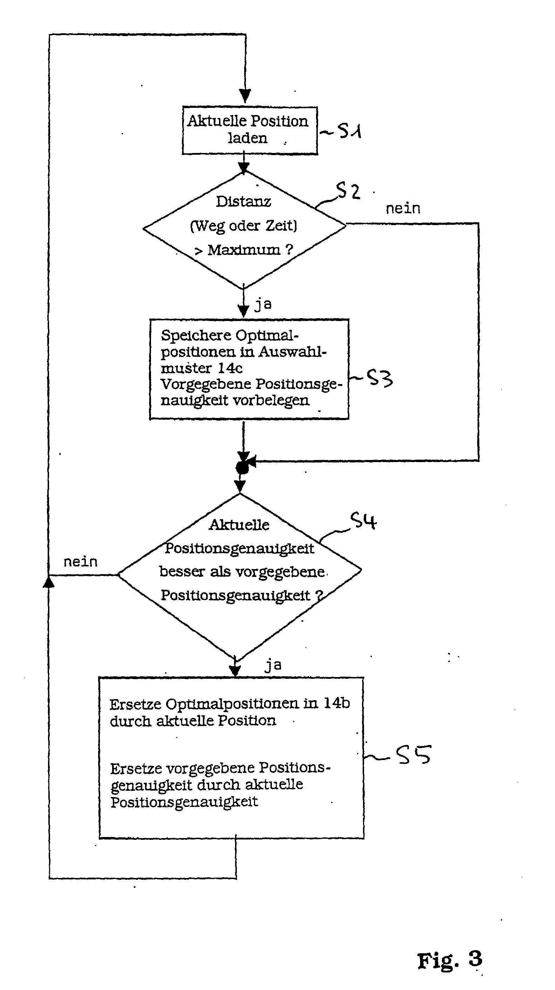

Sind dagegen die genannten Abschnitte (Weglängenabschnitte bzw. Zeitperioden) relativ kurz, könnten pro Abschnitt auch die Positionsdaten für jeweils nur eine Position gespeichert werden, die die oben erwähnte Bedingung für die Positionsgenauigkeit erfüllen. Zur Ermittlung dieser Positionsdaten bzw. Optimalpositionen werden dabei die Anforderungen an die Positionsgenauigkeit stufenweise heraufgesetzt, so daß schließlich pro Abschnitt diejenigen Positionsdaten aufgefunden werden, die in diesem Abschnitt die beste Positionsgenauigkeit aufweisen. Auf eine solche Variante beziehen sich die nachstehenden Figuren 2 und 3.

Die Figur 2 zeigt ein Blockschaltbild der erfindungsgemäßen Vorrichtung mit einem GPS-Empfänger 12, einer Auswähleinrichtung 13 zum Auswählen von Optimalpositionen, einer Speichereinrichtung 14 zur Speicherung von aktuellen Positionen, Optimalpositionen und ausgewählten Optimalpositionen, einem Sender 15 zum Aussenden von in der Speichereinrichtung 14 gespeicherten Positionen zu einem Serviceprovider 16 über eine Funkstrecke 17 bei auftreten eines vorbestimmten Ereignisses, sowie mit einem Schalter 18 zur Übertragung von Positionsdaten aus der Speichereinrichtung 14 zum Sender 15.

Wird die in Figur 1 gezeigte Fahrtroute 1 vom Kraftfahrzeug in Richtung des Pfeils Durchfahren, so erscheinen nacheinander am Ausgang des GPS-Empfängers 12 die Positionsdaten X, Y für die Positionen 2 bis 7. Diese Positionsdaten werden nacheinander in einem Speicher 14a als aktuelle Positionen mit den jeweils zugehörigen Positionsgenauigkeiten gespeichert. Dabei befindet sich im Speicher 14a zur Zeit jeweils nur ein Datensatz, der jeweils nur für eine Position die Positionsdaten mit zugehöriger Positionsgenauigkeit umfaßt.

Durch die Auswähleinrichtung 13 wird für jeweils einen Weglängenabschnitt oder Zeitabschnitt entlang der Fahrtroute 1 die jeweilige Optimalposition ausgesucht, die die beste Positionsgenauigkeit in diesem Abschnitt aufweist. Die beste Positionsgenauigkeit bedeutet hier, daß sie besser ist als alle anderen Positionsgenauigkeiten in diesem Abschnitt, die besser als die vorgegebene Positionsgenauigkeit sind. Die von der Auswähleinrichtung 13 ausgewählte Optimalposition wird dann in einem Speicher 14b der Speichereinrichtung 14 gespeichert. Auch in der Speichereinrichtung 14b befindet sich also zur Zeit nur ein Datensatz, nämlich die pro Routenabschnitt ausgewählten Positionsdaten für nur eine Position nebst zugehöriger Positionsgenauigkeit.

Für mehrere aufeinanderfolgende Routenabschnitte (Weglängenabschnitte oder Zeitlängenabschnitte) werden dann aufeinanderfolgende solcher Optimalpositionen durch die Auswähleinrichtung 13 auch in einem Speicher 14c der Speichereinrichtung 14 abgelegt. In diesem Speicher 14c befinden sich also n Datensätze, wobei n z.B. vier sein kann. Wird ein fünfter Routenabschnitt vom Fahrzeug durchfahren, so wird automatisch die ausgewählte Optimalposition für den ersten Routenabschnitt gelöscht, usw., so daß ständig nur vier Datensätze zur Verfügung stehen.

Tritt ein vorbestimmtes Ereignis ein, etwa ein Unfall des entlang der Fahrtroute 1 fahrenden Kraftfahrzeugs, so wird dies dem Sender 15 über einen Eingang 15a mitgeteilt. Dies kann automatisch oder manuell erfolgen. Über den Schalter 18 werden dann die Inhalte der Speichereinrichtungen 14a, 14b und 14c zum Sender 15 übertragen, der seinerseits die so erhaltenden Positionsdaten über eine Funkstrecke 17 zu einem Serviceprovider 16 sendet, beispielsweise zu einer Pannenhilfe, Polizeistation, und dergleichen.

Würde sich z.B. ein Unfall zum Zeitpunkt T in Figur 1 ereignen, so würden sich im Speicher 14c die Positionsdaten für die Positionen 3 und 5 befinden, im Speicher 14b die Positionsdaten für die Position 7, und im Speicher 14a entweder auch die Positionsdaten für die Position 7 oder für eine solche Position, die ausgehend von der Position 7 entlang der Fahrtroute 1 durch eine mit dem Kraftfahrzeug verbundene Einrichtung selbst ermittelt worden ist, beispielsweise durch Wegaufnehmer (Dead-Reckoning-Verfahren). Diese zuletzt genannte Position zusammen mit den Positionsdaten für die Positionen 3, 5 und 7 würden dann im Ereignissfall zum Serviceprovider 16 gesendet werden, so daß dort die Möglichkeit besteht, die Unfallposition des Kraftfahrzeugs sehr genau zu lokalisieren und exakt den Anfahrweg zum Unfallort festzulegen.

Die Figur 3 zeigt ein Ablaufdiagramm, nach dem die erfindungsgemäße Vorrichtung arbeitet. Dieses Ablaufdiagramm wird im Zusammenhang mit den Figuren 1 und 2 erläutert, wobei mit der Position 2 begonnen wird. Dabei sei angenommen, daß die Positionsdaten für die Position 2 eine Positionsgenauigkeit aufweisen, die der vorgegebenen Positionsgenauigkeit gleicht. Es handelt sich hier um die Positionsgenauigkeit 8.

Im Schritt S1 in Figur 3 werden also zunächst die Positionsdaten für die aktuelle Position 2 nebst zugehöriger Positionsgenauigkeit geladen. Zwischenspeicherung erfolgt in Speicher 14a. Danach wird im Schritt S2 geprüft, ob die Distanz (vorgegebene Weglänge oder vorgegebene Zeitperiode) bereits überschritten worden ist. Dies ist vorliegend nicht der Fall, da der Balken 9 in Figur 1 noch nicht erreicht worden ist. Somit wird nachfolgend Schritt S4 erreicht.

Im Schritt S4 wird geprüft, ob die aktuelle Positionsgenauigkeit für die Position 2 besser ist als die vorgegebene Positionsgenauigkeit. Dies ist für die Position 2 nicht der Fall, da vereinbarungsgemäß deren Positionsgenauigkeit gleich der vorgegebenen Positionsgenauigkeit sein sollte. Nachfolgend wird daher wiederum Schritt S1 erreicht.

Im Schritt S 1 werden nunmehr die Positionsdaten für die Position 3 nebst zugehöriger Positionsgenauigkeit geladen. Zwischenspeicherung erfolgt in Speicher 14a. Da der Balken 9 noch nicht erreicht wurde, wird nachfolgend Schritt S 4 abgearbeitet. Im Schritt S4 wird jetzt festgestellt, daß die aktuelle Positionsgenauigkeit der Position 3 besser ist als die vorgegebene Positionsgenauigkeit, was anhand des kleineren Kreises in Figur 1 verdeutlicht ist. Somit wird Schritt S5 erreicht.

Im Schritt S5 wird die Optimalposition im Speicher 14b durch die aktuelle Position ersetzt. Gleichzeitig wird die vorgegebene Positionsgenauigkeit durch die aktuelle Positionsgenauigkeit ersetzt, so daß die Anforderungen für die Positionsgenauigkeit nachfolgender Positionen erhöht wird. Danach wird wiederum Schritt S1 erreicht.

Es werden jetzt im Schritt S1 die Positionsdaten für die Position 4 nebst zugehöriger Positionsgenauigkeit geladen. Zwischenspeicherung erfolgt in Speicher 14a.

Dann wird in Schritt S2 festgestellt, daß die Distanz überschritten wurde. Die vorbestimmte Weglänge wurde also zurückgelegt bzw. die Zeitperiode überschritten. Es wird daher nachfolgend Schritt S3 erreicht. Im Schritt S3 wird jetzt die Position 3 als Optimalposition im Speicher 14c gespeichert. Gleichzeitig wird die vorgegebene Positionsgenauigkeit wieder vorbelegt, also auf den alten Wert zurückgestellt.

Danach wird im Schritt S4 geprüft, ob die aktuelle Positionsgenauigkeit, also diejenige für die Position 4, besser ist als die vorgegebene Positionsgenauigkeit. Dies ist für die Position 4 nicht der Fall (Kreis mit sehr großem Radius), so daß nachfolgend wieder Schritt S1 erreicht wird.

Im Schritt S1 werden jetzt die Positionsdaten für die Position 5 nebst zugehöriger Positionsgenauigkeit geladen. Zwischenspeicherung erfolgt in Speicher 14a.

Im Schritt S2 wird festgestellt, daß die Distanz noch nicht überschritten wurde, da der Balken 10 noch nicht erreicht worden ist. Es wird daher nachfolgend Schritt S4 erreicht.

Im Schritt S4 wird festgestellt, daß die aktuelle Positionsgenauigkeit, also diejenige der Position 5, besser ist als die vorgegebene Positionsgenauigkeit, so daß nachfolgend Schritt S5 erreicht wird.

Im Schritt S5 wird die Optimalposition im Speicher 14b jetzt durch die aktuelle Position (Position 5) ersetzt. Gleichzeitig wird die vorgegebene Positionsgenauigkeit durch die aktuelle Positionsgenauigkeit ersetzt, also durch diejenige der Position 5. Danach wird wiederum Schritt S1 erreicht.

Im Schritt S1 werden sodann die Positionsdaten für die Position 6 geladen nebst zugehöriger Positionsgenauigkeit. Zwischenspeicherung erfolgt in Speicher 14a.

Jetzt wird in Schritt S2 festgestellt, daß der Balken 10 überschritten wurde, so daß nachfolgend Schritt S3 erreicht wird.

Im Schritt S3 wird die Optimalposition, also die Position 5, im Speicher 14c als zweite Position gespeichert.

Gleichzeitig wird in Schritt S3 die vorgegebene Positionsgenauigkeit wieder vorbelegt, also auf den alten Wert eingestellt.

Danach wird in Schritt S4 geprüft, ob die aktuelle Positionsgenauigkeit der Position 6 besser ist als die vorgegebene (alte) Positionsgenauigkeit. Dies ist nicht der Fall, so daß nachfolgend wieder Schritt S1 erreicht wird.

Im Schritt S 1 werden dann die Positionsdaten für die Position 7 nebst zugehöriger Positionsgenauigkeit geladen. Zwischenspeicherung erfolgt in Speicher 14a.

Da der Balken 11 noch nicht erreicht worden ist, wird nachfolgend Schritt S4 abgearbeitet.

Im Schritt S4 wird festgestellt, daß die aktuelle Positionsgenauigkeit der Position 7 besser ist als die vorgegebene Positionsgenauigkeit, so daß nachfolgend Schritt S5 erreicht wird.

In Schritt S5 wird die Optimalposition im Speicher 14b durch die aktuelle Position ersetzt, und es wird wiederum die vorgegebene Positionsgenauigkeit durch die aktuelle Positionsgenauigkeit ersetzt.

Danach wird im Normalfall wieder Schritt S1 erreicht, und es wird die nächste Position geladen, usw..

Tritt jedoch zum Zeitpunkt T das zuvor erwähnte Ereignis auf, werden die Inhalte der Speicher 14a, 14b und 14c zum Serviceprovider 16 gesandt, in diesem Fall also, falls kein Dead-Reckoning-Verfahren angewandt wird, die Position 7 als aktuelle Position aus dem Speicher 14a, die Position 7 als Optimalposition aus dem Speicher 14b und die Positionen 3 und 5 als ausgewählte Optimalpositionen aus dem Speicher 14c.

## Patentansprüche

1. Verfahren zur Bestimmung der Position einer mobilen Kommunikationseinrichtung, die
- Positionsdaten (2-7) zusammen mit dazugehörigen Positionsgenauigkeiten (8) erhält und
- zur Ermittlung von Optimalpositionen (3, 5, 7) einer Route, auf der sich die Kommunikationseinrichtung bewegt, mehrere solcher zuletzt erhaltener Positionsdaten speichert, deren Positionsgenauigkeit besser ist als eine vorgegebene Positionsgenauigkeit.

2. Verfahren nach Anspruch 1, **dadurch gekennzeichnet, daß** eine jeweilige der Optimalpositionen entlang jeweils einer vorbestimmten Weglänge ermittelt wird.

3. Verfahren nach Anspruch 1, **dadurch gekennzeichnet, daß** eine jeweilige der Optimalpositionen in jeweils einer vorbestimmten Zeitperiode ermittelt wird.

4. Verfahren nach einem der Ansprüche 1 bis 3, **dadurch gekennzeichnet, daß** die vorgegebene Positionsgenauigkeit (8) verändert wird.

5. Verfahren nach Anspruch 4, **dadurch gekennzeichnet, daß** während der vorbestimmten Weglänge bzw. der vorbestimmten Zeitperiode die vorgegebene Positionsgenauigkeit durch eine solche von später gelieferten Positionsdaten ersetzt wird, die besser ist als die vorgegebene Positionsgenauigkeit.

6. Verfahren nach Anspruch 4 oder 5, **dadurch gekennzeichnet, daß** die vorgegebene Positionsgenauigkeit zu Beginn einer jeden vorbestimmten Weglänge oder vorbestimmten Zeitperiode neu auf einen Anfangswert eingestellt wird.

7. Verfahren nach Anspruch 5, **dadurch gekennzeichnet, daß** der Anfangswert verändert wird.

8. Verfahren nach einem der Ansprüche 1 bis 7, **dadurch gekennzeichnet, daß** im Bedarfsfall die Kommunikationseinrichtung wenigstens diejenigen Optimalpositionen zu einem Serviceprovider (16) überträgt, die für vollständig durchlaufene vorbestimmte Weglängen bzw. vorbestimmte Zeitperioden ermittelt worden sind.

9. Verfahren nach Anspruch 8, **dadurch gekennzeichnet, daß** zusätzlich diejenige Optimalposition zum Serviceprovider (16) übertragen wird, die bei Eintreten des Bedarfsfalls für eine noch nicht vollständig durchlaufene vorbestimmte Weglänge bzw. vorbestimmte Zeitperiode ermittelt worden ist.

10. Verfahren nach Anspruch 8 oder 9, **dadurch gekennzeichnet, daß** zusätzlich die bei Eintreten des Bedarfsfalls letzten empfangenen Positionsdaten zum Serviceprovider übertragen werden.

11. Verfahren nach einem der Ansprüche 1 bis 10, **dadurch gekennzeichnet, daß** die Kommunikationseinrichtung die Positionsdaten zusammen mit den Positionsgenauigkeiten von einer Funk-Navigationseinrichtung erhält.

12. Kommunikationseinrichtung, die Positionsdaten (2-7) zusammmen mit dazugehörigen Positionsgenauigkeiten (8) erhält, mit:
- einer Auswähleinrichtung (13) zum Auswählen mehrerer solcher zuletzt gelieferter Positionsdaten, deren Positionsgenauigkeit besser ist als eine vorgegebene Positionsgenauigkeit, sowie
- einer Speichereinrichtung (14) zum Speichern der so ausgewählten mehreren Positionsdaten als Optimalpositionen einer Route, auf der sich die Kommunikationseinrichtung bewegt.

13. Kommunikationseinrichtung nach Anspruch 12, **gekennzeichnet durch** eine Schalteinrichtung, **durch** die im Bedarfsfall die Speichereinrichtung (14) mit einem Sender (15) verbindbar ist.

14. Kommunikationseinrichtung nach Anspruch 12 oder 13, **dadurch gekennzeichnet, daß** die Auswähleinrichtung (13) einen Zeitraum für das Auswählen der Positionsdaten in Abhängigkeit von Steuersignalen einstellt, die nach Zurücklegen vorbestimmter Weglängen der Kommunikationseinrichtung oder nach Ablauf vorbestimmter Zeitperioden erzeugbar sind.

15. Kommunikationseinrichtung nach einem der Ansprüche 12 bis 14, **dadurch gekennzeichnet, daß** sie ein über Satelliten arbeitendes Funknavigationsgerät enthält.

16. Kommunikationseinrichtung nach einem der Ansprüche 12 bis 15, **dadurch gekennzeichnet, daß** sie in einem Kraftfahrzeug installierbar ist.

## Claims

1. Method for finding the position of a mobile communications device, which
- receives position data (2-7) together with associated position accuracies (8) and
- in order to determine optimum positions (3, 5, 7) on a route along which the communications device is moving, stores a number of such most recently received position data items whose position accuracy is better than a predetermined position accuracy.

2. Method according to Claim 1, **characterized in that** a respective one of the optimum positions is determined along in each case one predetermined journey distance.

3. Method according to Claim 1, **characterized in that** a respective one of the optimum positions is determined in in each case one predetermined time period.

4. Method according to one of Claims 1 to 3, **characterized in that** the predetermined position accuracy (8) is changed.

5. Method according to Claim 4, **characterized in that,** within the predetermined journey distance or the predetermined time period, the predetermined position accuracy is replaced by such a position accuracy from position data which are supplied later, which position accuracy is better than the predetermined position accuracy.

6. Method according to Claim 4 or 5, **characterized in that** the predetermined position accuracy is reset to a new initial value at the start of each predetermined journey distance or predetermined time period.

7. Method according to Claim 5, **characterized in that** the initial value is changed.

8. Method according to one of Claims 1 to 7, **characterized in that**, when required, the communications device transmits to a service provider (16) at least those optimum positions which have been determined for predetermined journey distances or predetermined time periods which have been completed.

9. Method according to Claim 8, **characterized in that**, in addition, that optimum position is transmitted to the service provider (16) which have been determined, when the requirement occurred, for a predetermined journey distance or predetermined time period which had not yet been completed.

10. Method according to Claim 8 or 9, **characterized in that**, in addition, the most recently received position data when the requirement occurred are transmitted to the service provider.

11. Method according to one of Claims 1 to 10, **characterized in that** the communications device receives the position data together with the position accuracies from a radio navigation device.

12. Communications device which receives position data (2-7) together with associated position accuracies (8), having:
- a selection device (13) for selecting a number of such most recently received position data items whose position accuracy is better than a predetermined position accuracy, as well as
- a memory device (14), in order to store the number of position data items selected in this way, as optimum positions on a route along which the communications device is moving.

13. Communications device according to Claim 12, **characterised by a** switching device, by means of which the memory device (14) can be connected to a transmitter (15) when required.

14. Communications device according to Claim 12 or 13, **characterized in that** the selection device (13) sets a time period for the selection of the position data, as a function of control signals which can be produced once the communications device has travelled through predetermined journey distances or once predetermined time periods have elapsed.

15. Communications device according to one of Claims 12 to 14, **characterized in that** this communications device contains a radio navigation appliance which operates via satellites.

16. Communications device according to one of Claims 12 to 15, **characterized in that** this communications device can be installed in a motor vehicle

## Revendications

1. Procédé pour déterminer la position d'un dispositif de communication mobile qui :
- reçoit des données de position (2 - 7) accompagnées de données correspondantes (8) établissant la précision des positions et qui
- pour identifier à partir de positions optimales (3, 5, 7) la route sur laquelle se déplace le dispositif de communication, mémorise une pluralité de données de position reçues en dernier et dont la précision de position est meilleure qu'une précision de position prédéterminée.

2. Procédé selon la revendication 1, **caractérisé en ce que** les positions optimales respectives sont déterminées chaque fois sur un parcours prédéterminé.

3. Procédé selon la revendication 1, **caractérisé en ce que** les positions optimales respectives sont déterminées chaque fois sur une période de temps prédéterminée.

4. Procédé selon l'une des revendications 1 à 3, **caractérisé en ce que** la précision prédéterminée (8) des positions est modifiée.

5. Procédé selon la revendication 4, **caractérisé en ce que** dans le parcours prédéterminé ou durant la période de temps prédéterminée, la précision prédéterminée des positions est remplacée par une précision de position obtenue à partir des données de position fournies subséquemment, qui est meilleure que la précision de position prédéterminée.

6. Procédé selon la revendication 4 ou la revendication 5, **caractérisé en ce que** la précision de position prédéterminée est remise à une valeur initiale au commencement de chaque parcours prédéterminé ou de chaque période de temps prédéterminée.

7. Procédé selon la revendication 5, **caractérisé en ce que** la valeur initiale est modifiée.

8. Procédé selon l'une des revendications 1 à 7, **caractérisé en ce qu'**en cas de besoin, le dispositif de communication transmet à un prestataire de services (16) au moins les positions optimales qui ont été déterminées au terme d'un parcours prédéterminé complet ou au terme d'une période de temps prédéterminée complète.

9. Procédé selon la revendication 8, **caractérisé en ce qu'**en cas de besoin, les position optimales qui ont été déterminées avant le terme d'un parcours prédéterminé complet ou d'une période de temps prédéterminé complète sont transmises en plus à un prestataire de services (16).

10. Procédé selon la revendication 8 ou la revendication 9, **caractérisé en ce qu'**en cas de besoin, les dernières données de position saisies sont transmises en plus au prestataire de services.

11. Procédé selon l'une des revendications 1 à 10, **caractérisé en ce que** le dispositif de communication reçoit les données de position accompagnées de données établissant la précision des positions, depuis un dispositif de radionavigation.

12. Dispositif de communication qui reçoit des données de position (2 - 7) accompagnées de données (8) établissant la précision des positions avec :
- un dispositif de sélection (13) pour sélectionner une pluralité de données de position fournies en dernier et dont la précision de position est meilleure qu'une précision de position prédéterminée, et également
- un dispositif de mémoire (14) pour conserver la pluralité de données de position ainsi sélectionnées, en tant que données optimales de position de la route sur laquelle se déplace le dispositif de communication.

13. Dispositif de communication selon la revendication 12, **caractérisé en ce qu'**en cas de besoin, un dispositif de commutation peut permettre de connecter le dispositif de mémoire (14) avec un émetteur (15).

14. Dispositif de communication selon la revendications 12 ou la revendication 13, **caractérisé en ce que** le dispositif de sélection (13) fixe une fenêtre de temps pour la sélection des données de position en fonction de signaux de commande qui peuvent être produits, au terme du parcours prédéterminé complet du dispositif de communication, ou au terme de la période de temps prédéterminée complète.

15. Dispositif de communication selon l'une des revendications 12 à 14, **caractérisé en ce qu**'il comprend un appareil de radionavigation fonctionnant par satellite.

16. Dispositif de communication selon l'une des revendications 12 à 15, **caractérisé en ce qu'**il peut être installé dans un véhicule automobile.
